# EUROPÄISCHE PATENTSCHRIFT

(11) **EP 0 736 043 B1**
(45) Veröffentlichungstag und Bekanntmachung des Hinweises auf die Patenterteilung: **29.10.1997**
(21) Anmeldenummer: 95903343.2
(22) Anmeldetag: 14.12.1994
(51) Int. Cl.: C08B 37/14, C08L 5/14, D06M 15/03

(54) **VERFAHREN ZUM ABBAU VON POLYGALAKTOMANNANEN**
PROCESS FOR THE DEGRADATION OF POLYGALACTOMANNANES
PROCEDE DE DEGRADATION DE POLYGALACTOMANNANES

(30) Priorität: 23.12.1993 DE 4344156
(43) Veröffentlichungstag der Anmeldung: 09.10.1996
(73) Patentinhaber: Grünau Illertissen GmbH, D-89257 Illertissen (DE)
(72) Erfinder: HORLACHER, Peter, D-89079 Ulm (DE); SANDER, Andreas, D-89257 Illertissen (DE); CHRISTELEIT, Jürgen, D-89257 Illertissen (DE); HOLZER, Josef, D-89257 Illertissen (DE)
(74) Vertreter: Wilk, Hans-Christof, Dr.
(86) Internationale Anmeldenummer: EP9404151
(87) Internationale Veröffentlichungsnummer: WO9517431

(56) Entgegenhaltungen:
- WO-A-93/10156
- GB-A- 853 378
- DATABASE WPI Week 9207, Derwent Publications Ltd., London, GB; AN 92-051440 & JP,A,3 290 196 (MEIJI SEIKA KAISHA) 19. Dezember 1991
- DATABASE WPI Week 7606, Derwent Publications Ltd., London, GB; AN 76-09989X & JP,A,50 083 469 (TEIJIN KK) 5. Juli 1975
- DATABASE WPI Week 9207, Derwent Publications Ltd., London, GB; AN 92-051440 & JP-A-3 290 196
- DATABASE WPI Week 7606, Derwent Publications Ltd., London, GB; AN 76-09989X & JP-A-50 083 469

## Beschreibung

Die Erfindung betrifft ein kontinuierliches Verfahren zum Abbau von Polygalaktomannanen in Gegenwart von Wasser und einem höhersiedenden Alkohol.

Polygalaktomannane, die aus Endospermabschnitten von Samen verschiedener Leguminosen wie Guar, Johannisbrot, Cassia occidentalis oder Tara gewonnen werden, finden aufgrund ihres hohen Wasseraufnahmevermögens in zahlreichen, sehr unterschiedlichen Industriezweigen Verwendung, beispielsweise in der Textilindustrie als Verdickungsmittel oder Schlichtemittel, in der Papierindustrie als Massezusatz bei der Papierherstellung und in der Lebensmittelindustrie zur Stabilisierung von Speiseeis, Suppen, Soßen und Cremen (Ullmanns Encyklopädie der technischen Chemie, 4. Auflage, Band 19, Seiten 260 bis 261, Verlag Chemie, Weinheim 1980). Um die Eigenschaften von Polygalaktomannanen für spezielle Verwendungszwecke zu optimieren, können Polygalaktomannane beispielsweise mit Natriumhydroxid oder mit Wasserstoffperoxid in alkalischem Medium abgebaut (depolymerisiert) werden, wie z. B. in Carbohydrate Polymers 11, 279 (1989), und in der europäischen Patentanmeldung EP 146 911 beschrieben.

Aus dem Stand der Technik ist weiter bekannt, daß kolloidale Kartoffelstärke mit Salzsäure in einem Extruder unter Anwendung von hohen Drücken abgebaut werden kann (J. Food Science 52, 1387 (1987)). Aus J. Food Sci. 49, 453 (1984) und Biotechnol. Prog. 7, 251 (1991) ist der Abbau von Stärke mit Wasser im Extruder bekannt.

Die aus den US-Patenten 4,269,975 und 3,855,149 bekannte Extrusion von Guarsplits zur Herstellung von hochviskosem Guar und von Johannisbrotkernmehl und Mischungen aus Johannisbrotkernmehl und Guar zur Erhöhung der Kaltwasserlöslichkeit des Johannisbrotkernmehls führt zu Produkten, die im Vergleich zu nicht extrudierten Produkten eine deutlich höhere Viskosität besitzen. Ein Abbau der Polygalaktomannane, der mit einer Viskositätserniedrigung verbunden ist, findet bei diesen Extrusionsvorgängen somit nicht statt.

In der Deutschen Patentanmeldung DE 41 37 237 wird ein kontinuierliches Verfahren zum Abbau von Polygalaktomannanen in Gegenwart einer Säure und/oder eines Oxidationsmittels in einer Extrusionsmaschine bei Temperaturen oberhalb von 80 °C und einem Druck unterhalb von 5 x 10⁶ Pa beschrieben. Es werden zwar Polygalaktomannane mit verbesserter Rieselfähigkeit und geringerer Neigung zur Kompaktierung unter Druck erhalten, die Produkte haben jedoch den Nachteil, daß die Nebenprodukte, insbesondere Neutralisationssalze, die durch den Herstellungsprozeß in das Produkt eingetragen werden, enthalten. Beim Abbau der Polygalaktomannane in Gegenwart von Säuren oder mit Luft/NaOH werden durch Neutralisation die entsprechenden Salze gebildet, die bei der Reinigung und Aufarbeitung des Produktes in das Abwasser gelangen, was zu ökologischen Nachteilen dieses Verfahrens führt.

Aufgabe der vorliegenden Erfindung war es, ein kontinuierliches Verfahren zum Abbau von Polygalaktomannanen zur Verfügung zu stellen, welches sich durch eine kurze Reaktionszeit auszeichnet und womit ein Produkt erhalten wird, welches eine gleichmäßige Zusammensetzung aufweist und keine Reaktionsnebenprodukte, wie z. B. Salze (Natriumphosphat oder dergleichen), enthält.

Gegenstand der Erfindung ist ein Verfahren zum Abbau von Polygalaktomannanen, worin die Polygalaktomannane in Gegenwart von Wasser und einem höhersiedenden Alkohol, d.h. Alkohole mit einem Siedepunkt über 180°C, kontinuierlich in eine Extrusionsmaschine eingeführt und bei einer Temperatur über 180 °C der intensiven Zwangsdurchmischung unterworfen werden und das Produkt nach Durchlaufen der Extrusionsmaschine zur Trockung oder Weiterverarbeitung entnommen wird.

Überraschenderweise wurde gefunden, daß durch das erfindungsgemäße Verfahren staubarme Produkte erhalten werden, die sich besonders gut einrühren lassen. Ein weiterer Vorteil des Verfahrens ist, daß keine anorganischen oder organischen Salze in das Verfahrensprodukt eingetragen werden.

Als höhersiedende Alkohole, die zur Durchführung des erfindungsgemäßen Verfahrens geeignet sind, kommen Alkohole mit einem Siedepunkt über 180 °C, bevorzugt über 195 °C in Betracht. Als Beispiele können Ethylenglykol, Propandiole, Glycerin, Butandiole und dergleichen in Betracht. Bevorzugt wird Glycerin eingesetzt.

Der höhersiedende Alkohol und Wasser liegen im Reaktionsgemisch in einem Verhältnis von 0,11 bis 0,5, bevorzugt 0,14 bis 0,5 vor.

Unterschiedliche Polygalaktomannane können im erfindungsgemäßen Verfahren eingesetzt werden. Bevorzugt sind Guar, z.B. in Form von Guarmehl oder Guarsplits, Johannisbrotkernmehl (1,4-Polygalaktomannan) oder vergleichbare Produkte aus der Pflanze Tara bzw. der Pflanze Cassia occidentales.

Der Gehalt an Polygalaktomannanen im Reaktionsgemisch ist über 40 Gew.-%, bevorzugt zwischen 40 und 59,9 Gew.-%.

Vorzugsweise wird das erfindungsgemäße Verfahren bei einer Temperatur von 180°C bis 250°C, besonders bevorzugt bei einer Temperatur zwischen 195°C und 250°C durchgeführt.

Die Depolymerisation der Polygalaktomannane wird erfindungsgemäß in einer Extrusionsmaschine durchgeführt. Als Extrusionsmaschinen sind Geräte mit einer oder mehreren Schnecken geeignet, die gleichsinnig oder gegensinnig laufen können. Besonders geeignet sind gleichsinnig laufende Doppelschneckenextruder. Der Einsatz von Extrusionsmaschinen erlaubt eine kontinuierliche Arbeitsweise.

Die Polygalaktomannane, das Wasser und der höhersiedende Alkohol können gleichzeitig oder nacheinander in die Extrusionsmaschine gegeben werden. In einer bevorzugten Ausführungsform werden Wasser und der höhersiedende Alkohol erst nach der Beschickung der Extrusionsmaschine mit Polygalaktomannan zudosiert. Die Zugabe von Alkohol und Wasser erfolgt bevorzugt 2 bis 4 D nach der Feststoffdosierung. In einer besonders bevorzugten Ausführungsform wird der Alkohol zuerst und Wasser etwas weiter stromab zum Polygalaktomannan gegeben. Bei getrennter Zugabe können Wasser und Alkohol über zwei getrennte Dosierstellen, die aber an derselben Stelle der Extrusionsmaschine sein können, 2 bis 4 D nach der Feststoffdosierung zudosiert werden. Bevorzugt werden Wasser und Alkohol dann in einem Abstand von mindestens 2 D zudosiert.

Um eine unnötige thermische oder mechanische Belastung der eingesetzten Stoffe oder Produkte zu vermeiden, hat es sich als günstig erwiesen, die Verweilzeit in der Extrusionsmaschine auf 30 bis 300 sec. einzustellen. Unter diesen Verfahrensbedingungen wird ein Produkt erhalten, welches das erwünschte Molekulargewicht aufweist. Die nach dem erfindungsgemäßen Verfahren hergestellten Produkte zeigen bezogen auf den Trockensubstanzgehalt des Polysaccharids als 3%ige kolloidale Lösung eine Viskosität von 100 bis 20.000 mPas (Brookfield RVT, 20 Upm, 20 °C). Das Molekulargewicht des Produktes korreliert mit dessen Viskosität und kann aus der Viskosität mit Hilfe von mathematischen Gleichungen ermittelt werden.

Die nach dem erfindungsgemäßen Verfahren hergestellten Produkte zeigen gegenüber den nach dem Stand der Technik erhaltenen Produkten den Vorteil, daß sie eine sehr hohe Reinheit und eine gleichmäßige Zusammensetzung aufweisen. Darüberhinaus bietet das erfindungsgemäße Verfahren wirtschaftliche Vorteile.

Die nach dem erfindungsgemäßen Verfahren hergestellten Produkte finden aufgrund ihres hohen Wasseraufnahmevermögens in zahlreichen sehr unterschiedlichen Industriezweigen Verwendung, insbesondere als Verdickungsmittel für wäßrige Zubereitungen. Sie können beispielsweise in der Textilindustrie als Additive bei der Behandlung von Textilfasern, als Verdickungsmittel oder nach Molekulargewichtsabbau als Schlichtemittel, in der Papierindustrie als Massezusatz bei der Papierherstellung und in der Lebensmittelindustrie zur Stabilisierung von Speiseeis, Suppen, Soßen und dergleichen eingesetzt werden.

### Beispiele

Als Extrusionsmaschine wurde ein gleichsinnig laufender Doppelschneckenextruder mit einem Schneckendurchmesser von 40 mm (ZSK 40, Werner & Pfleiderer GmbH, Stuttgart) und einer effektiven Verfahrenslänge von 28 D unter den in der Tabelle 1 aufgeführten Bedingungen in den Versuchsreihen eingesetzt. Die Viskositäten der abgebauten Polygalaktomannane sind ebenfalls dieser Tabelle zu entnehmen. Die angegebenen Viskositäten wurden mit Hilfe eines Brookfield Rotationsviskosimeter RVT bei 20 °C und 20 Upm mit der geeigneten Spindel gemessen.

| Beispiele | 1 | 2 | 3 | 4¹⁾ |
|---|---|---|---|---|
| Dosierung (kg/h) | | | | |
| Guar⁵⁾ | 28,5 | 25,0 | 24,6 | 28,5 |
| Glycerin²⁾ | 2,15 | 1,9 | 1,7 | - |
| Wasser²⁾ | 15,05 | 13,1 | 11,7 | 17,2 |
| | | | | |
| Temperatur³⁾ (°C) | 200 | 200 | 200 | 200 |
| | | | | |
| Drehzahl (Upm) | 170 | 230 | 230 | 170 |
| | | | | |
| Verfahrenslänge (D) | 28 | 28 | 28 | 28 |
| | | | | |
| Viskosität(mPas) ⁴⁾ | 12 000 | 4 500 | 2 750 | 23 750 |

| | | | | |
|---|---|---|---|---|
| 1) Vergleich, Abbau nur mit Wasser | | | | |
| 2) Glycerin und Wasser wurden zusammen zugegeben | | | | |
| 3) Gehäusetemperatur | | | | |
| 4) 20 °C; 3%ig, bezogen auf Trockensubstanz | | | | |
| 5) Feuchtgehalt: 11,9 % | | | | |

Aus der voranstehenden Tabelle ist ersichtlich, daß in Gegenwart von ausschließlich Wasser kein nennenswerter Abbau des Polygalaktomannans erhalten wurde, während durch Zugabe von Glycerin ein Abbau erfolgte.

## Patentansprüche

1. Verfahren zum Abbau von Polygalaktomannanen, worin man Polygalaktomannane in Gegenwart von Wasser und einem Alkohol mit einem Siedepunkt von über 180°C Kontinuierlich in einer Extrusionsmaschine bei einer Temperatur von mindestens 180°C der intensiven Zwangsdurchmischung unterwirft und das Produkt nach Durchlaufen der Extrusionsmaschine zur Trocknung oder Weiterverarbeitung entnimmt.

2. Verfahren nach Anspruch 1, dadurch gekennzeichnet, daß als Polygalaktomannan Guar verwendet wird.

3. Verfahren nach Anspruch 1 oder 2, dadurch gekennzeichnet, daß Alkohol Glycerin verwendet wird.

4. Verfahren nach einem der Ansprüche 1 bis 3, dadurch gekennzeichnet, daß das Gewichtsverhältnis von Alkohol zu Wasser 0,14 bis 0,5 beträgt.

5. Verfahren nach einem der Ansprüche 1 bis 4, dadurch gekennzeichnet, daß als Extrusionsmaschine ein Doppelschneckenextruder eingesetzt wird.

6. Verfahren nach einem der Ansprüche 1 bis 5, dadurch gekennzeichnet, daß die Umsetzung in einem Temperaturbereich von 180°C bis 250°C durchgeführt wird.

7. Verfahren nach einem der Ansprüche 1 bis 6, dadurch gekennzeichnet, daß Wasser und der Alkohol zusammen 2 bis 4 D nach der Beschickung der Extrusionsmaschine mit Polygalaktomannan zudosiert werden.

8. Verfahren nach Anspruch 7, dadurch gekennzeichnet, daß Wasser und der Alkohol nacheinander in einem Abstand von mindestens 2 D zudosiert werden.

9. Verwendung der nach einem Verfahren der Ansprüche 1 bis 8 erhaltenen Produkte als Additiv bei der Behandlung von Textilfasern, oder als Verdickungsmittel für wäßrige Zubereitungen.

## Claims

1. A process for the degradation of polygalactomannans in which polygalactomannans are continuously subjected to intensive forced compounding in an extruder at a temperature of at least 180°C in the presence of water and an alcohol with a boiling point above 180°C and, after passing through the extruder, the product is removed for drying or further processing.

2. A process as claimed in claim 1, characterized in that guar is used as the polygalactomannan.

3. A process as claimed in claim 1 or 2, characterized in that glycerol is used as the alcohol.

4. A process as claimed in any of claims 1 to 3, characterized in that the ratio by weight of alcohol to water is 0.14 to 0.5:1.

5. A process as claimed in any of claims 1 to 4, characterized in that a twin screw extruder is used as the extruder.

6. A process as claimed in any of claims 1 to 5, characterized in that the reaction is carried out at a temperature of 180°C to 250°C.

7. A process as claimed in any of claims 1 to 6, characterized in that water and the alcohol are added together 2 to 4 D after charging of the extruder with polygalactomannan.

8. A process as claimed in claim 7, characterized in that water and the alcohol are added one after the other with an interval of at least 2 D.

9. The use of the products obtained by the process claimed in claims 1 to 8 as an additive in the treatment of textile fibres or as a thickener for water-containing formulations.

## Revendications

1. Procédé de dégradation de polygalactomannanes, dans lequel on soumet des polygalactomannanes en présence d'eau et d'alcool ayant un point d'ébullition supérieur à 180°C, en continu, dans une machine d'extrusion à une température d'au moins 180°C, à un mélange intime forcé et en ce qu'on retire le produit après traversée de la machine d'extrusion en vue du séchage ou d'une transformation ultérieure.

2. Procédé selon la revendication 1,
caractérisé en ce qu'
on utilise comme polygalactomannane, du guar.

3. Procédé selon la revendication 1 ou la revendication 2,
caractérisé en ce qu'
on utilise comme alcool du glycérol.

4. Procédé selon l'une des revendications 1 à 3,
caractérisé en ce que
le rapport en poids de l'alcool à l'eau s'élève de 0,14 à 0,5.

5. Procédé selon l'une des revendications 1 à 4,
caractérisé en ce qu'
on met en oeuvre comme machine d'extrusion une boudineuse à deux vis.

6. Procédé selon l'une des revendications 1 à 5,
caractérisé en ce qu'
on effectue la réaction dans une plage de températures allant de 180 à 250°C.

7. Procédé selon l'une des revendications 1 à 6,
caractérisé en ce que
l'eau et l'alcool sont admis par doses ensemble de 2 à 4 D après le chargement de la machine d'extrusion avec le polygalactomannane.

8. Procédé selon la revendication 7,
caractérisé en ce que
l'eau et l'alcool sont admis par doses consécutivement dans un intervalle, d'au moins 2 D.

9. Utilisation des produits obtenus selon un procédé des revendications 1 à 8, comme additif dans le traitement des fibres textiles ou comme agent d'épaississement pour des préparations aqueuses.
